# EUROPÄISCHE PATENTSCHRIFT

(11) **EP 0 925 639 B1**
(45) Veröffentlichungstag und Bekanntmachung des Hinweises auf die Patenterteilung: **27.06.2007**
(21) Anmeldenummer: 98941313.3
(22) Anmeldetag: 10.07.1998
(51) Int. Cl.: H02N 1/00, G01C 19/56, H01L 41/04

(54) **MIKROMECHANISCHE VORRICHTUNG**
MICROMECHANICAL DEVICE
DISPOSITIF MICROMECANIQUE

(30) Priorität: 16.07.1997 DE 19730443
(43) Veröffentlichungstag der Anmeldung: 30.06.1999
(73) Patentinhaber: Deutsches Zentrum für Luft- und Raumfahrt e.V., 51147 Köln (DE)
(72) Erfinder: BÄHNISCH, Ralf, D-70197 Stuttgart (DE); BISSINGER, Norbert, D-73035 Göppingen (DE)
(74) Vertreter: Beck, Jürgen
(86) Internationale Anmeldenummer: PCT/EP1998/004286
(87) Internationale Veröffentlichungsnummer: WO 1999/004483

(56) Entgegenhaltungen:
- EP-A- 0 613 012
- WO-A-94/15176
- US-A- 4 078 436
- US-A- 4 163 162
- US-A- 4 546 292
- US-A- 5 072 288
- US-A- 5 353 656

## Beschreibung

Die Erfindung betrifft eine mikromechanische Vorrichtung, welche einen kapazitiven Mikroaktor und eine Ansteuerungsschaltung für den Mikroaktor aufweist, wobei die Ansteuerungsschaltung eine spannungsgesteuerte Stromquelle umfaßt, um dem Mikroaktor einen Strom einzuprägen.

Ferner betrifft die Erfindung ein Verfahren zur Ansteuerung eines kapazitiven Mikroaktors, bei dem dem Mikroaktor ein Strom eingeprägt wird.

Aus der US 4,546,292 ist ein Kontrollkreis zur Kontrolle eines elektrostatischen Motors in der Form eines Kondensators bekannt, welcher eine erste Elektrode und eine zweite Elektrode umfaßt, die relativ zueinander beweglich sind. Der Kontrollkreis umfaßt eine Spannungsquelle zur Anwendung einer Gleichspannung zwischen den Elektroden des Kondensators und Meßmittel zum Messen des resultierenden Stromflusses des Kondensators.

Aus der US 5,353,656 A ist ein elektrostatisch kontrolliertes mikromechanisches Gyroskop bekannt, welches einen Rotor aufweist und einen elektrostatischen Motor zum Antreiben des Rotors.

Bei aus dem Stand der Technik bekannten mikromechanischen Vorrichtungen erfolgt die Bewegung des Mikroaktors zumeist durch elektrostatische Kräfte, d.h. der Mikroaktor ist als kapazitiver Mikroaktor ausgebildet. Zur Erzeugung dieser Kräfte müssen elektrische Felder mittels einer Ansteuerungsschaltung am Mikroaktor erzeugt werden. Dies erfolgt über Aktorelektroden. Die bekannten Vorrichtungen weisen zusätzliche Elektroden auf, die als Sensorelemente zur Detektion der Bewegung bzw. Stellung des Mikroaktors dienen. Die zwei verschiedenen Gruppen von Elektroden, die Aktorelektroden und die Sensorelektroden, können zu einer gegenseitigen Beeinflussung und Funktionsstörung führen und erfordern einen aufwendigen Aufbau des Mikroaktors.

Daher liegt der Erfindung mit den eingangs genannten Merkmalen die Aufgabe zugrunde, eine mikromechanische Vorrichtung bereitzustellen, welche einfach aufgebaut ist und bei der sich die Stellung und/oder die Bewegung des Mikroaktors auf einfache Weise ermitteln läßt.

Diese Aufgabe wird bei der mikromechanischen Vorrichtung mit den eingangs genannten Merkmalen erfindungsgemäß dadurch gelöst, daß der Mikroaktor als kapazitiver Greifer ausgebildet ist und daß die Ansteuerungsschaltung eine Driftkompensationseinrichtung zur Kompensation einer Drift der spannungsgesteuerten Stromquelle umfaßt.

Bei den aus dem Stand der Technik bekannten Vorrichtungen werden die elektrischen Felder zur Erzeugung der elektrostatischen Kräfte, welche die Bewegung des Mikroaktors bewirken, durch Anlegen einer konstanten Wechselspannung zwischen den Elektroden des Mikroaktors hervorgerufen. Bei dieser Beschaltung ist der Zusammenhang zwischen der Kraft zwischen den Elektroden und dem Abstand der Elektroden nichtlinear und insbesondere nimmt die Kraft bei abnehmendem Abstand zu, so daß sich beispielsweise Störungen oder Driften, die den Abstand zwischen den Elektroden erhöhen bzw. verringern, gegenseitig verstärken können. Um den Abstand zwischen den Elektroden zu messen, muß bei diesen Vorrichtungen eine Strommessung erfolgen. Ein solcher Strom ist aber schwierig zu messen, und der Meßstrom hängt nichtlinear von dem Elektrodenabstand ab.

Bei der erfindungsgemäßen Vorrichtung ist eine spannungsgesteuerte Stromquelle vorgesehen, um dem Mikroaktor einen Strom einzuprägen. Die Änderung des Ladungszustandes des Mikroaktors führt dabei zu keiner Änderung des eingeprägten Stroms. Die elektrostatische Kraft zwischen den Elektroden ist bei der erfindungsgemäßen Beschaltung im wesentlichen unabhängig von dem Abstand zwischen den Elektroden. Dadurch verstärken sich Störungen und eine Drift im Abstand zwischen den Elektroden nicht. Zur Messung des Elektrodenabstandes kann auf einfache Weise eine entsprechende Spannung zwischen den Elektroden herangezogen werden, die - im Gegensatz zu einem Meßstrom bei der Einprägung einer konstanten Spannung - im wesentlichen linear vom Abstand zwischen den Elektroden abhängig ist, so daß eine einfache Auswertbarkeit gegeben ist. Nach Kalibrierung des Elektrodenabstands lassen sich dann absolute Abstände messen.

Die Einprägung eines spannungsgesteuerten Stroms gegenüber einer Konstantspannung hat weiter den Vorteil, daß sich beispielsweise für einen Mikroaktor mit einer linearen Kraft-Abstands-Kennlinie bezüglich einer Abstandsänderung zwischen den Elektroden zwischen dieser Abstandsänderung und einem eingeprägten Wechselstrom ein eindeutiger Zusammenhang ergibt, während sich bei der Einprägung einer Konstant-Wechsel- oder Gleichspannung ein nicht eindeutiger Zusammenhang zwischen der Abstandsänderung und der eingeprägten Spannung ergibt. Daher ist bei der erfindungsgemäßen Stromeinprägung der Abstand zwischen den Elektroden des Mikroaktors beispielsweise durch Steuerung der Stromamplitude erheblich einfacher einstellbar und die erfindungsgemäße Vorrichtung besitzt universellere Einsatzmöglichkeiten. Es kann damit auch auf Sensorelektroden verzichtet werden.

Durch die Bereitstellung einer Driftkompensationseinrichtung der spannungsgesteuerten Stromquelle wird gewährleistet, daß eine Drift des Nullpunkts, welche beispielsweise durch Drift-Arbeitspunktverschiebungen von Steuerungshalbleitern der spannungsgesteuerten Stromquelle verursacht sind, kompensierbar ist. Dadurch wird beispielsweise verhindert, daß sich störende Ladungen auf den Elektroden des Mikroaktors ansammeln können, die zu einer unerwünschten Bewegung bzw. Stellung des Mikroaktors führen könnten.

Da der Mikroaktor als kapazitiver Greifer ausgebildet ist, läßt er sich insbesondere zur Abstandsmessung einsetzen. Beispielsweise kann die Dicke von Werkstücken gemessen werden, indem diese in den Mikroaktor eingebracht werden, dessen Elektroden solange bewegt werden, bis sie an dem Werkstück anliegen und das entsprechende Spannungssignal zur Ermittlung des Elektrodenabstandes und damit der Werkstückdicke ermittelt wird. Das Anstoßen von Greiferelementen an das Werkstück bei ihrer Bewegung läßt sich dabei aufgrund einer Kapazitätsänderung ebenfalls durch das Spannungssignal ermitteln. Der Greifer läßt sich auch zum Transportieren und Positionieren von Werkstücken einsetzen.

Vorteilhafterweise ist durch die Driftkompensationseinrichtung ein Ausgang der spannungsgesteuerten Stromquelle auf einen driftfreien Arbeitspunkt legbar. Dadurch ist gewährleistet, daß keine Störströme oder Störspannungen durch die spannungsgesteuerte Stromquelle verursacht werden und dem Mikroaktor kein Strom eingeprägt wird, wenn die Eingangsspannung der spannungsgesteuerten Stromquelle Null ist, beispielsweise beim Nulldurchgang einer Wechselspannung. Dies ermöglicht eine störungsfreie Steuerung des Mikroaktors.

Konstruktiv besonders günstig ist es, wenn die Driftkompensationseinrichtung eine Spannungsrückführung für die spannungsgesteuerte Stromquelle umfaßt.

Dadurch läßt sich eine Ausgangsspannung der spannungsgesteuerten Stromquelle, welche durch eine Drift beeinflußt ist, direkt zur Kompensation letzterer einsetzen.

Besonders vorteilhaft ist es dann, wenn die Spannungsrückführung als Gegenkopplung ausgebildet ist. Auf diese Weise ist dafür gesorgt, daß unabhängig von der Richtung der Drift diese stets kompensierbar sind.

Günstigerweise koppelt dann die Spannungsrückführung einen Ausgang der spannungsgesteuerten Stromquelle mit Steuerungselementen der Stromquelle, welche die Stromerzeugung steuern. Bei diesen Steuerungselementen handelt es sich insbesondere um Transistoren. Durch diese Kopplung sind auf einfache Weise Arbeitspunktverschiebungen der Transistoren beispielsweise aufgrund von thermischer Drift, welche zur Drift am Ausgang der spannungsgesteuerten Stromquelle führt, durch zusätzliches Anlegen einer entsprechenden Gegenspannung mit der Spannungsrückführung kompensierbar.

Besonders vorteilhaft ist es, wenn die Spannungsrückführung einen Gleichrichter umfaßt. Dadurch ist die entsprechende Drift auf einfache und sichere Weise kompensierbar. Insbesondere ist es dann vorteilhaft, wenn der Gleichrichter als Zwei-Weg-Gleichrichter ausgebildet ist, so daß Drift in beiden Richtungen kompensierbar ist.

Bei einer günstigen Variante einer Ausführungsform, welche insbesondere bei einer idealen Stromquelle zum Einsatz kommt, wird eine an dem Mikroaktor abgegriffene Teilspannung zur Detektion der Stellung und/oder Bewegung des Mikroaktors der Auswerteeinheit zugeführt.

Besonders vorteilhaft ist es, wenn zu dem Mikroaktor eine Kapazität in Reihe geschaltet ist. Mittels des Mikroaktors, welcher als Kapazität wirkt, und der in Reihe geschalteten Kapazität läßt sich dann ein Spannungsteiler realisieren, der eine einfache und gute Auswertbarkeit und Ermittlung der Bewegung und Stellung des Mikroaktors erlaubt, insbesondere wenn die Stromquelle nicht ideal ist.

Günstigerweise umfaßt die Vorrichtung eine Auswerteeinheit, durch welche die Stellung und/oder Bewegung des Mikroaktors detektierbar ist.

Vorteilhafterweise ist der Auswerteeinheit eine an der in Reihe mit dem Mikroaktor geschalteten Kapazität abgegriffene Teilspannung zur Detektion der Stellung und/oder Bewegung des Mikroaktors zugeführt. Diese Teilspannung wird bei einer insbesondere schnellen Bewegung der Elektroden des Mikroaktors verändert, da sich das Spannungsteilerverhältnis dadurch ebenfalls ändert und sich dabei die Ausgangsspannung der spannungsgesteuerten Stromquelle nicht sofort auf die veränderte Kapazität einstellt. Da der Mikroaktor in seiner Dimensionierung in der Regel auf die entsprechenden Anwendungen beispielsweise als elektrostatischer Greifer oder als Aufhängevorrichtung optimiert ist und durch die mikromechanischen Herstellungsverfahren eingeschränkt ist, kann durch entsprechende Wahl der in Reihe geschalteten Kapazität die Größe der abgegriffenen Teilspannung so gewählt werden, daß sich eine optimale Auswertbarkeit ergibt.

Bei einer besonders günstigen Variante einer Ausführungsform der erfindungsgemäßen mikromechanischen Vorrichtung umfaßt die Auswerteeinheit einen Dividierer, der einen Quotient aus einer am Eingang der spannungsgesteuerten Stromquelle abgegriffenen Eingangsspannung und der Teilspannung, welche zur Detektion der Stellung und/oder Bewegung des Mikroaktors dient, bildet. Dieser Quotient ist ein Maß für die Bewegung und insbesondere die Abstandsänderung der Elektroden des Mikroaktors. Aus dem Quotienten läßt sich bestimmen, ob die Elektroden sich relativ zueinander bewegt haben und bei entsprechender Auswertung läßt sich die relative Stellung der Elektroden zueinander bestimmen. Besonders günstig ist es dabei, wenn die mikromechanische Vorrichtung Gleichrichter zur Gleichrichtung jeweils der am Eingang der spannungsgesteuerten Stromquelle abgegriffenen Spannung und der Teilspannung vor der Quotientenbildung im Dividierer umfaßt, so daß sich eine leichte Auswertbarkeit des Quotienten ergibt.

Bei einer vorteilhaften Variante einer Ausführungsform ist mittels der Auswerteeinheit ein Schwellenwertschalter gebildet. Insbesondere läßt sich der ermittelte Quotient zur Bestimmung der Schaltschwelle einsetzen.

Besonders günstig ist es, wenn die mikromechanische Vorrichtung als Sensor einsetzbar ist, wobei der kapazitive Mikroaktor als Sensorelement wirkt. Da die Verschiebung der Elektroden des Mikroaktors eine Änderung eines Spannungssignales bewirkt, kann entsprechend aus dem Spannungssignal ein Abstand der Elektroden ermittelt werden. Günstigerweise ist die mikromechanische Vorrichtung dann so ausgebildet, daß der Mikroaktor als Sensorelement zur Abstandsmessung einsetzbar ist. Da bei Einprägung eines Stromes die Spannung am Mikroaktor im wesentlichen proportional zu deren Abstand ist, kann aufgrund der Messung eines Spannungssignales der Abstand ermittelt werden. Beispielsweise läßt sich auch die Dicke eines dielektrischen Werkstücks mit bekannter Dielektrizitätskonstante ermitteln, das zwischen die Elektroden des Mikroaktors gebracht wird, indem durch die Stromansteuerung die Elektroden in einer Schließbewegung bewegt werden, bis sie am Werkstück anliegen. Dieses Anliegen ist durch die Änderung des Spannungssignals detektierbar und aus dem Wert des Spannungssignals läßt sich der Abstand der Elektrodenplatten und damit die Dicke des Werkstückes ermitteln.

Bei einer konstruktiv besonders einfachen Ausführungsform umfaßt der kapazitive Mikroaktor zwei gegenüberliegende Aktorelemente, welche durch elektrostatische Kräfte relativ zueinander beweglich sind, um eine Greifbewegung auszuführen.

Es kann dabei vorgesehen sein, daß zwischen den Aktorelementen an einem oberen Ende, welches einem Greifende abgewandt ist, ein Abstandshalter angeordnet ist. Dadurch läßt sich eine Greifbewegung realisieren, die durch Auslenkung der Aktorelemente relativ zueinander erfolgt, ohne daß diese verschieblich gelagert werden müssen.

Bei einer Variante einer Ausführungsform der erfindungsgemäßen mikromechanischen Vorrichtung umfaßt der kapazitive Mikroaktor zwischen äußeren Aktorelementen angeordnete elektrostatische Elemente, relativ zu welchen die äußeren Aktorelemente zur Durchführung der Greifbewegung beweglich sind. Durch elektrostatische Kräfte jeweils zwischen einem benachbartem äußeren Aktorelement und elektrostatischem Element ist eine Greifbewegung realisierbar. Diese gegenüberliegenden Elemente bilden einen Kondensator und der Mikroaktor läßt sich an jeweilige Anwendungen optimal anpassen.

Günstigerweise sind die elektrostatischen Elemente elektrisch leitend verbunden. Dadurch ist zwischen jeweils gegenüberliegenden äußeren Aktorelementen und elektrostatischen Elementen ein Kondensator gebildet und die Kondensatoren sind parallel geschaltet. Dies ermöglicht eine gute Einstellbarkeit der Greifbewegung.

Bei einer vorteilhaften Variante einer Ausführungsform ist es vorgesehen, daß zwischen den gegenüberliegenden elektrostatischen Elementen ein weiteres elektrostatisches Element angeordnet ist, gegenüber welchem die benachbarten elektrostatischen Elemente auf einem elektrischen Potential liegen. Dadurch ist ein Referenz- oder Fußpunktkondensator gebildet.

Bei einer vorteilhaften Ausführungsform der erfindungsgemäßen mikromechanischen Vorrichtung ist der kapazitive Mikroaktor als Aufhängevorrichtung zur Aufhängung eines Werkstückes mittels elektrostatischen Kräften ausgebildet. Bei dem Werkstück handelt es sich dabei beispielsweise um ein dielektrisches Werkstück. Die Elektroden des Mikroaktors bilden dann mit dem Werkstück einen Kondensator und das Werkstück wird in Richtung der Elektroden angezogen, so daß es mechanisch kontaktfrei aufgehängt werden kann.

Günstigerweise ist dann eine Aufhängeposition des Werkstücks an der Aufhängevorrichtung mit Hilfe der an der in Reihe mit dem Mikroaktor geschalteten Kapazität abgegriffenen Teilspannung und/oder der an dem Mikroaktor abgegriffenen Teilspannung regelbar. Die sich an den Mikroaktor einstellende Spannung hängt von der Größe der Kapazität und damit vom Abstand des Werkstückes von den Elektroden ab und diese Spannung läßt sich dann zur Regelung nutzen.

Es kann grundsätzlich vorgesehen sein, daß der Mikroaktor einen Rotor umfaßt. Ein solcher Rotor ist in der Veröffentlichung von Timothy J. Hawkey und Richard P. Torti, Integrated Microgyroscope, SPIE Volume 1694 (1992), Seiten 199 bis 207 beschrieben. Auf diese Druckschrift wird Bezug genommen.

Der Erfindung liegt ferner die Aufgabe zugrunde, ein Verfahren mit den eingangs genannten Merkmalen bereitzustellen, durch die ein Mikroaktor optimal ansteuerbar und die Bewegung und/oder Stellung des Mikroaktors auf genaue Weise ermittelbar ist.

Diese Aufgabe wird bei dem Verfahren mit den eingangs genannten Merkmalen erfindungsgemäß dadurch gelöst, daß der Mikroaktor als kapazitiver Greifer ausbildet ist und daß eine spannungsgesteuerte Stromquelle zur Erzeugung des eingeprägten Stroms, die eine Spannungsgegenkopplung zur Kompensation einer Drift der spannungsgesteuerten Stromquelle aufweist, eingesetzt wird.

Das erfindungsgemäße Verfahren weist die bereits im Zusammenhang mit der erfindungsgemäßen Vorrichtung diskutierten Vorteile auf.

In der Zeichnung zeigen:
- Fig. 1: ein Ausführungsbeispiel einer erfindungsgemäßen mikromechanischen Vorrichtung in einem Blockschaltbild;
- Fig. 2: ein Ausführungsbeispiel einer spannungsgesteuerten Stromquelle;
- Fig. 3a,b,c: einen zeitlichen Verlauf von verschiedenen, an der erfindungsgemäßen Vorrichtung abgegriffenen Spannungen;
- Fig. 4a,b: ein erstes Ausführungsbeispiel eines Mikroaktors in Seiten- und Vorderansicht;
- Fig. 5: ein zweites Ausführungsbeispiel eines Mikroaktors;
- Fig. 6: ein drittes Ausführungsbeispiel eines Mikroaktors und
- Fig. 7: ein viertes Ausführungsbeispiel eines Mikroaktors.

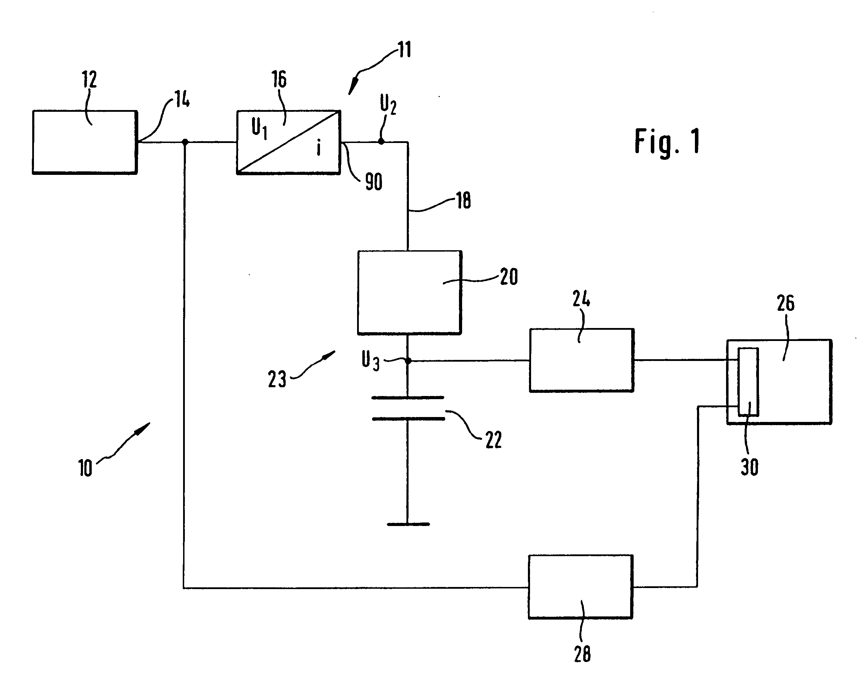

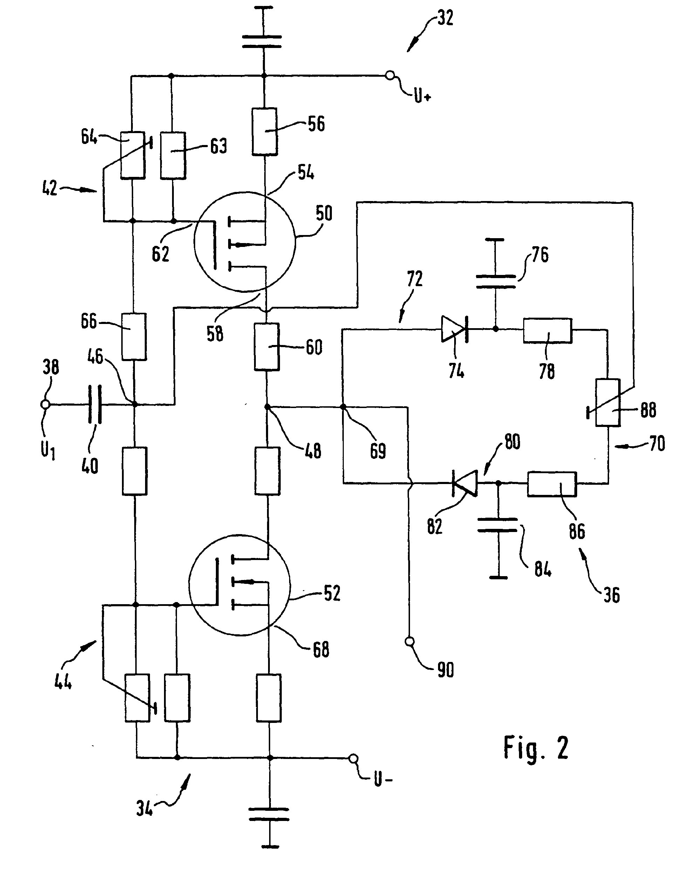

Ein Ausführungsbeispiel einer erfindungsgemäßen mikromechanischen Vorrichtung, welches in Fig. 1 gezeigt und als Ganzes mit 10 bezeichnet ist, umfaßt eine Ansteuerungsschaltung 11 mit einem Spannungsgenerator 12, der an einem Ausgang 14 eine Spannung und insbesondere eine Wechselspannung einer gewünschten Kurvenform bereitstellt. Dieser Ausgang 14 ist an einen als spannungsgesteuerte Stromquelle ausgebildeten Spannungs-Strom-Umsetzer 16 gekoppelt, der in Abhängigkeit der vom Spannungsgenerator 12 bereitgestellten Steuerspannung U₁ einen gesteuerten Wechselstrom i bereitstellt. Ein Ausführungsbeispiel der spannungsgesteuerten Stromquelle 16 ist in Fig. 2 gezeigt und wird unten beschrieben.

Der von der spannungsgesteuerten Stromquelle erzeugte Wechselstrom i wird über eine Leitung 18 einem Mikroaktor 20, bei dem es sich insbesondere um einen kapazitiven Mikroaktor handelt, eingeprägt. In Reihe zu diesem Mikroaktor 20 ist eine Kapazität 22 geschaltet.

An einer Ersatzkapazität 23, welche durch die Reihenschaltung des kapazitiven Mikroaktors und der Kapazität 22 gebildet ist, fällt bei der Einprägung des Stromes i eine Spannung U₂ ab. An der Kapazität 22 ist eine Teilspannung U₃ abgreifbar, wobei durch den kapazitiven Mikroaktor 20 und die Kapazität 22 ein Spannungsteiler gebildet ist. Diese Spannung wird in einem Gleichrichter 24 gleichgerichtet und einer Auswerteeinheit 26 zugeführt.

Die von dem Spannungsgenerator 12 an die spannungsgesteuerte Stromquelle 16 gelieferte Spannung U₁ wird von dem Ausgang 14 des Spannungsgenerators 12 abgegriffen, in einem Gleichrichter 28 gleichgerichtet und ebenfalls der Auswerteeinheit 26 zugeführt.

Die Auswerteeinheit 26 umfaßt einen Dividierer 30, an dessen ersten Eingang die gleichgerichtete Spannung U₃ und an dessen zweiten Eingang die gleichgerichtete Spannung U₁ geführt wird. Der Dividierer 30 bildet den Quotienten aus diesen gleichgerichteten Spannungen, welcher zur Auswertung der Bewegung und zur Ermittlung der Stellung des Mikroaktors 20 herangezogen wird.

Ein Ausführungsbeispiel einer spannungsgesteuerten Stromquelle, welche in Fig. 2 als Ganzes mit 32 bezeichnet ist, umfaßt eine Stromerzeugungsstufe 34 und eine Spannungsrückführungsstufe 36, welche als Driftkompensationseinrichtung zur Kompensation einer Drift und insbesondere einer Nullpunktsdrift der spannungsgesteuerten Stromquelle 16 dient.

Die Stromerzeugungsstufe 34 weist einen Anschluß 38 auf, an dem die vom Signalgenerator 12 erzeugte Spannung U₁ einkoppelbar ist. An den Anschluß 38 ist ein Koppelkondensator 40 gekoppelt, der insbesondere zum Ausfiltern von Gleichspannungsanteilen in U₁ dient.

Die Stromerzeugungsstufe 34 der spannungsgesteuerten Stromquelle 32 weist einen ersten Zweig 42 und einen zweiten Zweig 44 auf, welche einen gemeinsamen dem Kopplungskondensator 40 nachgeordneten Eingangskopplungspunkt 46 und einen gemeinsamen Ausgangskopplungspunkt 48 aufweisen.

Der erste Zweig 42 und der zweite Zweig 44 umfassen jeweils Steuerungselemente 50 bzw. 52, die zur Erzeugung eines gesteuerten Wechselstroms dienen. Dabei kann es sich insbesondere um bipolare Transistoren oder um FeldeffektTransistoren handeln.

Bei der in Fig. 2 gezeigten Variante einer Ausführungsform sind als Steuerungselemente Mosfets vorgesehen. Bei dem Steuerungselement 50 des ersten Zweigs 42 handelt es sich um einen p-Kanal-Mosfet vom Anreicherungstyp.

Ein Drain-Anschluß 54 des Mosfets 50 ist über einen Widerstand 56 auf ein positives Potential U₊ gelegt. Der Source-Anschluß 58 des Mosfets 50 ist über einen Widerstand 60 mit dem Ausgangskopplungspunkt 48 verbunden, so daß ein Drain-Source-Strom zu dem Ausgangskopplungspunkt 48 fließen kann.

Der Gate-Anschluß 62 ist mit einem auf das Potential U₊ gelegten Widerstand 63 verbunden, zu dem ein Trimmer 64 zur Feineinstellung des Arbeitspunktes des Mosfets 50 parallel geschaltet ist. Die Parallelschaltung des Widerstands 62 und des Trimmer 64 ist über einen Widerstand 66 mit dem Eingangskopplungspunkt 46 verbunden.

Der zweite Zweig 44 ist grundsätzlich gleich aufgebaut wie der erste Zweig 42 der Stromerzeugungsstufe 34, wobei jedoch das Steuerungselement 52 ein n-Kanal-Mosfet vom Anreicherungstyp ist. Ein Drain-Anschluß 68 des Mosfets 52 ist daher auf ein negatives Potential U₋ gelegt.

Die Spannungsrückführungsstufe 36 ist über einen Kopplungspunkt 69 an den Ausgangskopplungspunkt 48 gekoppelt und umfaßt einen Gleichrichter 70, der als Zwei-Weg-Gleichrichter ausgebildet ist. Ein erster Gleichrichter-Weg 72 umfaßt eine Diode 74, einen Glättungskondensator 76 und einen Widerstand 78. Ein zweiter Gleichrichter-Weg 80 umfaßt eine Diode 82, welche gegenüber der Diode 74 im ersten Gleichrichter-Weg 72 umgekehrte Polarität aufweist, sowie wiederum einen Glättungskondensator 84 und einen Widerstand 86.

Der erste Gleichrichter-Weg 72 und der zweite Gleichrichter-Weg 80 führen jeweils in Eingänge eines einstellbaren Widerstandes 88, an dem eine Spannung abgreifbar und auf den Eingangskopplungspunkt 46 rückführbar ist. Durch die Einstellbarkeit des Widerstandes 88 lassen sich insbesondere Unsymmetrien zwischen dem ersten Gleichrichter-Weg 72 und dem zweiten Gleichrichter-Weg 80 ausgleichen.

Ein Ausgang 90 der spannungsgesteuerten Stromquelle 32, an dem ein Wechselstrom bereitstellbar ist, ist dem Kopplungspunkt 69, an welchem der Gleichrichter 70 an den Ausgangskopplungspunkt 48 gekoppelt ist, nachgeordnet.

### Die spannungsgesteuerte Stromquelle arbeitet wie folgt:

Die Gate-Source-Spannung des Mosfets 50 ist über das Potential U₊ und die Widerstände 56, 63 und den Trimmer 64 auf einen bestimmten Arbeitspunkt gelegt, so daß ein Drain-Source-Strom zu dem Ausgangskopplungspunkt 48 fließt. Analog ist über das Potential U_ die Gate-Source-Spannung des Mosfets 52 auf einen Arbeitspunkt gelegt, der im Idealfall dem Arbeitspunkt des Mosfets 50, jedoch mit umgekehrtem Vorzeichen entspricht. Da es bei dem Mosfet 50 um einen p-Kanal-Mosfet handelt und bei dem Steuerungselement 52 um ein n-Kanal-Mosfet, sind die jeweiligen Drain-Source-Ströme entgegengerichtet. Wenn die Steuerungselemente 50 und 52 bis auf das Vorzeichen denselben Arbeitspunkt aufweisen und in der Nähe des Arbeitspunktes dasselbe Kennlinienfeld, dann kompensieren sich die Ströme am Ausgangskopplungspunkt 48 und am Ausgang 90 fließt kein Strom.

Mittels des Trimmers 64 bzw. des entsprechenden Trimmers im zweiten Zweig 44 lassen sich der erste Zweig 42 und der zweite Zweig 44 so anpassen, daß eine Stromkompensation am Ausgangskopplungspunkt 48 erreichbar ist.

Wird dem Anschluß 38 die Spannung U₁ zugeführt, so wird dadurch die Gate-Source-Spannung der Steuerelemente 50 und 52 verändert, wodurch die Source-Drain-Ströme im ersten Zweig 42 und im zweiten Zweig 44 jeweils gesteuert werden. Das Anlegen einer Spannung an den Anschluß 38 bewirkt je nach Vorzeichen eine Erhöhung des Source-Drain-Stroms im ersten Zweig 42 und eine entsprechende Erniedrigung des Source-Drain-Stroms im zweiten Zweig 44 bzw. umgekehrt. Die Mosfets weisen einen hohen Innenwiderstand auf, so daß die Stromerzeugungsstufe 34 als nahezu ideale spannungsgesteuerte Stromquelle wirken kann, bei der der resultierende und am Ausgang 90 abgreifbare Strom im wesentlichen durch eine Steuerspannung der spannungsgesteuerten Stromquelle 16 bestimmt ist.

Beim Betrieb der Stromerzeugungsstufe 34 kann es aufgrund einer Drift, beispielsweise einer thermischen Drift insbesondere der Halbleiterelemente zu Verschiebungen der Arbeitspunkte der Steuerungselemente 50 und/oder 52 kommen. Dadurch sind die Arbeitspunkte der Steuerungselemente 50 und 52 nicht mehr symmetrisch zueinander, so daß beispielsweise auch bei verschwindender Eingangsspannung U₁ ein unerwünschter Strom am Ausgang 90 auftreten kann. Um dies zu verhindern, wird über den Gleichrichter 70 eine Spannung vom Ausgangskopplungspunkt 48 auf den Eingangskopplungspunkt 46 zurückgeführt. Dadurch ist eine Gegenkopplung realisiert, da diese gleichgerichtete Spannung gerade der Verschiebung des Arbeitspunkt des jeweiligen Steuerungselementes 50 oder 52 entgegenwirkt und damit das Driften der Arbeitspunkte kompensierbar macht. Auf diese Weise ist der Ausgangskopplungspunkt 48 auf einen Arbeitspunkt von Null einstellbar, der nicht driftet.

Dadurch ist der am Ausgang 90 abgegriffene Strom direkt durch die Eingangsspannung U₁ gesteuert und von Drift und insbesondere Arbeitspunkt-Drift der Halbleiterbauelemente der spannungsgesteuerten Stromquelle unabhängig.

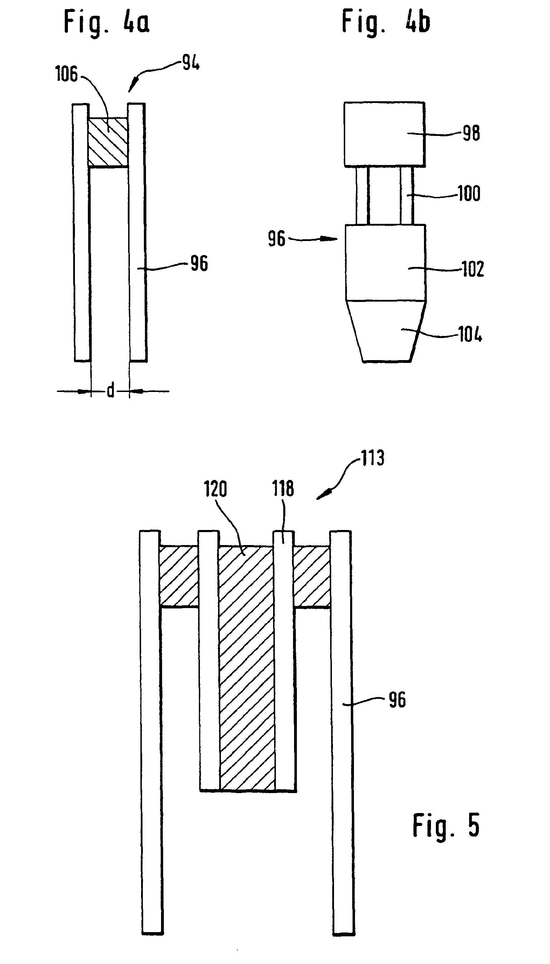

Durch die Ansteuerungsschaltung 11 wird der Mikroaktor 20 angesteuert. Bei einer Variante eines Ausführungsbeispieles ist der kapazitive Mikroaktor als Greifer 94 (Fig. 4a, Fig. 4b) ausgebildet. Dazu umfaßt der Greifer 94 Aktorelemente 96, welche gegenüberliegend angeordnet sind und mindestens auf einem Teilbereich von gegenüberliegenden Flächen metallisch leitende Flächen aufweisen, so daß zwischen den entsprechenden Flächen elektrostatische Kräfte wirken können. Ein Aktorelement 96 weist ein Befestigungselement 98 auf, durch das an einer Aufhängung 100 ein elektrostatisches Element 102 gehalten ist. Das elektrostatische Element 102 ist aus Metall gefertigt oder weist mindestens auf einer dem gegenüberliegenden Aktorelement zugewandten Fläche eine Metallschicht auf. An das elektrostatische Element ist an seinem unteren Ende ein Verjüngungselement 104 angeordnet, durch das ein Greifende des Greifers 94 gebildet ist.

Das Verjüngungselement 104 ist so geformt, daß dadurch eine optimale Greifbewegung zum Greifen eines Werkstücks erfolgen kann. Es ist bevorzugterweise aus einem nichtleitenden Material gefertigt, so daß die elektrostatischen Elemente 102 allein für die Kraftausübung verantwortlich sind.

Die Aufhängung 100 ist aus in vertikaler Richtung verlaufenden streifenförmigen Elementen gebildet, beispielsweise aus zwei streifenförmigen Elementen, durch die die elektrostatischen Elemente 102 bei Kraftausübung auslenkbar sind mit einer Achse senkrecht zur vertikalen Richtung.

Die Befestigungselemente 98 der gegenüberliegenden Aktorelemente 96 sind an einem Abstandshalter 106 gehalten, so daß durch elektrostatische Kräfte zwischen den elektrostatischen Elementen 102 diese sich relativ zueinander und zum Abstandshalter 106 bewegen können, um am Greifende des Greifers 94 eine Greifbewegung durchzuführen.

### Die Ansteuerung des Mikroaktors 20 erfolgt wie folgt:

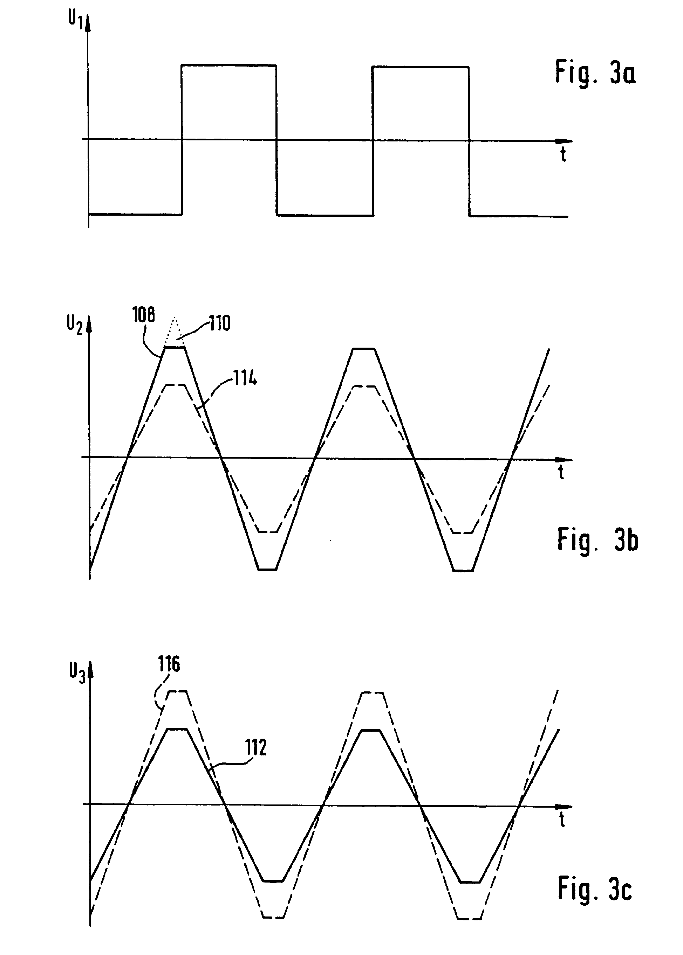

Der Spannungsgenerator 12 erzeugt eine Wechselspannung U₁ beispielsweise in der Form einer Rechteckspannung (Fig. 3a). Der am Ausgang 90 der spannungsgesteuerten Stromquelle 16 abgegriffene Strom ist dann proportional zu dieser Rechteckspannung U₁. Der kapazitive Mikroaktor 20, der mit der Kapazität 22 einen Spannungsteiler bildet, wird zusammen mit dieser Kapazität durch den spannungsgesteuerten Wechselstrom geladen, wobei die an der durch den kapazitiven Aktor 20 und die Kapazität 22 gebildeten Ersatzkapazität 23 eine Spannung U₂ abfällt, die umgekehrt proportional zum Wert der Ersatzkapazität ist und proportional zum Integral des Ladestroms über der Zeit ist.

Zwischen den Aktorelementen 96 des Mikroaktors 20 bildet sich ein elektrisches Feld und aufgrund dieses elektrischen Feldes ziehen sich die Aktorelemente 96 aufgrund elektrostatischer Kräfte an. Die elektrostatische Kraft ist dabei im wesentlichen proportional zum Quadrat der elektrischen Feldstärke und damit zum Quadrat der Amplitude des Stroms i.

Für einen Plattenkondensator mit parallelen Elektrodenplatten ist die Proportionalität zwischen elektrostatischer Kraft und Feldstärkequadrat bzw. Amplitudenquadrat des Stroms exakt. Solange diese elektrostatischen Kräfte kleiner sind als die Rückstellkraft der Aktorelemente 96, bewegen sich diese nicht. Die Spannung U₂, die proportional zum Zeitintegral über dem Strom i ist, ist sägezahnförmig (Bezugszeichen 108 in Fig. 3b). Dabei werden insbesondere aufgrund der Glättungskondensatoren 76 und Widerstände 78 bzw. 84 und 86 im Gleichrichter 70, welche als Tiefpaß wirken, Spannungsspitzen 110 abgeschnitten. Bei einer Kapazität von ca. 2pF des kapazitiven Mikroaktors 20 und bei einer Kapazität von ca. 100 pF der Kapazität 22 liegt die Amplitude der Spannung U₂ beispielsweise bei ca. 50 V.

Die an der Kapazität 22 abgegriffene Teilspannung ist in Fig. 3c gezeigt (Bezugszeichen 112). Sie weist infolge der Stromintegration ebenfalls einen Sägezahnverlauf und durch die Tiefpaßwirkung des Gleichrichters 70 abgeschnittene Spannungsspitzen auf.

Ist die spannungsgesteuerte Stromquelle 16 ideal, d.h. weist sie einen unendlich hohen Innenwiderstand auf, dann ist die Spannung U₃ konstant und unabhängig von der Bewegung der Aktorelemente 96. Bei einer nicht idealen Stromquelle 16, die einen zwar hohen aber noch endlichen Innenwiderstand aufweist, ist die Spannung U₃ nicht unabhängig von der Bewegung der Aktorelemente 96. In diesem Fall kann daher auch U₃ zur Auswertung herangezogen werden. Entsprechend wird dann U₃ dem Gleichrichter 24 zur Gleichrichtung zugeführt.

Für die ideale spannungsgesteuerte Stromquelle 16 kann es erfindungsgemäß vorgesehen sein, daß auf die Kapazität 22 verzichtet wird.

Wird die Eingangsspannung U₁ erhöht und damit die Amplitude des Stroms i, mit dem der kapazitive Aktor 20 beaufschlagt ist, bis die Rückstellkraft der Aktorelemente 96 überwunden ist, dann bewegen sich diese aufeinander zu. Dadurch nimmt ein Abstand d aufgrund der elektrostatischen Kräfte zwischen den Aktorelementen 96 ab und die Kapazität des kapazitiven Aktors 94 bzw. 20 nimmt zu. Dadurch vergrößert sich die Ersatzkapazität der Reihenschaltung des kapazitiven Aktors 20 und der Kapazität 22, was in einer Verringerung der Spannung U₂ resultiert. Dies ist in Fig. 3b durch den Spannungsverlauf mit den Bezugszeichen 114 angedeutet, bei dem durch Vergrößerung der Kapazität des kapazitiven Aktors 20 die Amplitude der Spannung U₂ sinkt. Die Spannungssenkung gegenüber feststehenden Aktorelementen 96 beträgt beispielsweise 10 V.

Da sich das Spannungsteilerverhältnis zwischen der Kapazität 22 mit dem kapazitiven Aktor 20 aufgrund der Änderung der Kapazität des kapazitiven Aktors 20 ändert, sofern sich die spannungsgesteuerte Stromquelle 16, insbesondere wenn sie nicht ideal ist, nicht sofort auf die veränderten Verhältnisse einstellt, erhöht sich die Spannung U₃. Dies ist in der Fig. 3c durch den Spannungsverlauf mit dem Bezugszeichen 116 angedeutet. Die entsprechende Spannungserhöhung ist dabei ein Maß für die Abstandsänderung der Aktorelemente 96, da die an dem kapazitiven Mikroaktor 20 abfallende Spannung bei eingeprägtem konstanten Wechselstrom im wesentlichen proportional zum Abstand d ist.

Der Dividierer 30 bildet den Quotient aus der gleichgerichteten Spannung U₁ und U₃ oder - im Falle einer idealen Stromquelle - U₁ oder U₂. Solange sich die Aktorelemente 96 nicht oder nicht zu schnell bewegen, ist dieser Quotient konstant. Da sich die Spannung U₃ bzw. U₂ durch die Bewegung der Aktorelemente 96 verändert, verändert sich damit auch der durch den Dividierer 30 gebildete Quotient. Der Quotient kann damit zur Ermittlung der Bewegung und/oder Stellung der Aktorelemente 96 verwendet werden. Insbesondere ist die erfindungsgemäße Vorrichtung dabei als Schwellenwertschalter einsetzbar, da, sobald die Rückstellkraft durch die elektrostatischen Kräfte überwunden ist, sich der Quotient ändert und sich dies als Schaltschwelle verwenden läßt.

Aus der Änderung des Quotienten läßt sich insbesondere nach entsprechender Kalibrierung der Vorrichtung der Abstand d der Aktorelemente 96 ermitteln. Der Greifer 94 läßt sich über die Spannung U₁ steuern und über den Quotienten läßt sich der Abstand der elektrostatischen Elemente 102, welche als Greifelemente wirken, bestimmen. Dies kann beispielsweise eingesetzt werden zur Dickenbestimmung von dielektrischen Werkstücken. Die Aktorelemente 96 werden dabei solange verschoben, bis sie an einem zwischen sie gebrachten Werkstück anliegen und ihr Abstand wird ermittelt. Das Anstoßen der Aktorelemente 96 an das Werkstück äußert sich dabei in einer Änderung des Quotienten-Spannungssignals, da die Kapazität des kapazitiven Aktors 20 verändert wird. (Das Ersatzschaltbild für ein dielektrisches Werkstück in dem kapazitiven Aktor 20 ist eine Schaltung von Kondensatoren mit unterschiedlichen dielektrischen Füllungsmedien.) Es lassen sich auch Dickenbestimmungen an metallischen Werkstücken durchführen, wenn die elektrostatischen Elemente 102 zum Werkstück hin isoliert sind. Dies kann erfindungsgemäß dadurch erfolgen, daß eine isolierende Schutzschicht auf den elektrostatischen Elementen vorgesehen ist oder der Greifer 94 aufgeteilt ist in elektrostatische Elemente, zwischen welche elektrostatische Kräfte wirken, und nichtleitende Greifelemente für den Greifkontakt mit dem Werkstück (Fig. 4b.)

Bei einer zweiten Variante eines Ausführungsbeispieles eines kapazitiven Aktors 119, welche in Fig. 5 gezeigt ist, umfaßt der Greifer parallel zueinander angeordnete elektrostatische Elemente 118, zwischen welchen ein Abstandshalter 120 angeordnet ist und welche selber zwischen den Aktorelementen 96 angeordnet sind. Eine dem Aktorelement 96, welches grundsätzlich so aufgebaut ist wie oben beschrieben, gegenüberliegende Fläche eines elektrostatischen Elements 118 ist dabei mit einer Metallschicht versehen bzw. das ganze elektrostatische Element 118 ist aus Metall gefertigt. Sind die elektrostatischen Elemente 118 mittels einer Metallschicht gebildet, kann der Abstandshalter 120, welcher als isolierendes Element wirkt, auch entfallen. Dadurch ist zwischen einem elektrostatischen Element 118 und einem Aktorelement 96 eine Spannung anlegbar, so daß zwischen dem elektrostatischen Element 118 und dem Aktorelement 96 ein elektrisches Feld bestehen kann, durch welches eine relative Bewegung des Aktorelementes 96 zu dem elektrostatischen Element 118 verursachbar ist. Es kann dabei erfindungsgemäß vorgesehen sein, daß die gegenüberliegenden elektrostatischen Elemente leitend miteinander verbunden sind. Auf diese Weise ist durch diese Anordnung eine Parallelschaltung zweier von einem elektrostatischen Element 118 und dem Aktorelement 96 gebildeten Kondensatoren realisiert.

Die Greifbewegung der Aktorelemente 96 erfolgt dann relativ zu den festen elektrostatischen Elementen 118.

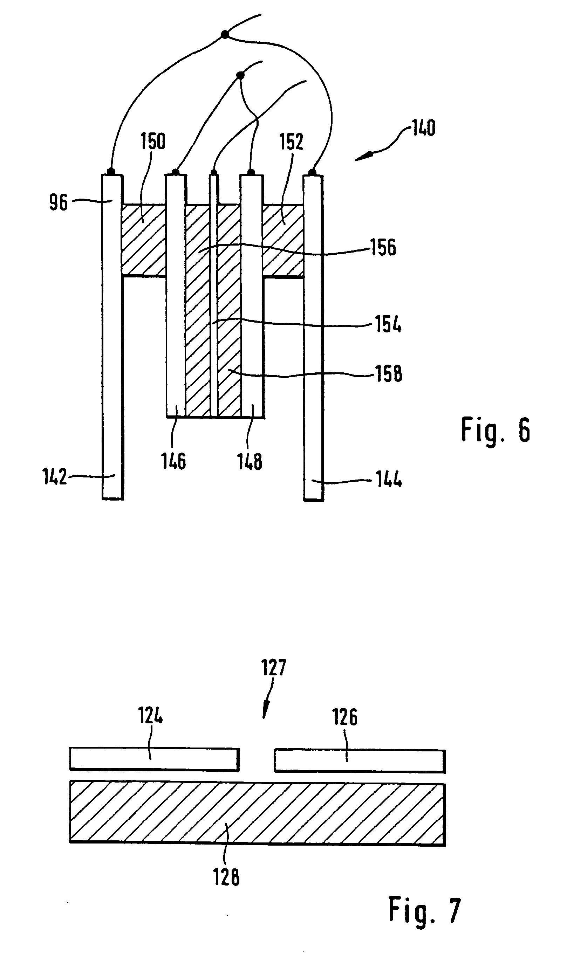

Eine dritte Variante eines Ausführungsbeispieles eines kapazitiven Mikroaktors 140, welche in Fig. 6 gezeigt ist, umfaßt wiederum Aktorelemente 96, die jeweils durch eine erste äußere Kondensatorplatte 142 und durch eine zweite äußere Kondensatorplatte 144 gebildet sind.

In einem Raumbereich zwischen dieser ersten äußeren Kondensatorplatte 142 und der zweiten äußeren Kondensatorplatte 144 sind eine erste innere Kondensatorplatte 146 und eine zweite innere Kondensatorplatte 148 angeordnet, wobei jeweils zwischen der ersten inneren Kondensatorplatte 146 und der ersten äußeren Kondensatorplatte 142 ein Abstandshalter 150 und zwischen der zweiten inneren Kondensatorplatte 148 und der zweiten äußeren Kondensatorplatte 144 ein Abstandshalter 152 angeordnet ist. Die Anordnung ist bevorzugterweise derart, daß die erste innere Kondensatorplatte 146 und die zweite innere Kondensatorplatte 148 parallel zueinander ausgerichtet sind.

Die äußeren Kondensatorplatten 142 und 144 wirken als Greifelemente. Es kann erfindungsgemäß auch vorgesehen sein, daß an ihrem unteren Ende Greifelemente insbesondere aus einem elektrisch nichtleitenden Material angeordnet sind, um die Greifbewegung zu verbessern und um beispielsweise auch metallische Werkstücke greifen zu können.

Damit die inneren Kondensatorplatten 146 und 148 nicht in den Bewegungsraum der Aktorelemente 96, gebildet durch die äußeren Kondensatorplatten 142 und 144, hineinreichen, weisen sie bevorzugterweise eine geringere Höhe als diese auf. Zwischen dem Plattenpaar der inneren Kondensatorplatten 146 und 148 ist eine weitere Platte 154 angeordnet, wobei zu der ersten inneren Platte 146 ein Abstandshalter 156 und zur zweiten inneren Platte 148 ein Abstandshalter 158 vorgesehen ist.

Es kann erfindungsgemäß vorgesehen sein, daß die Abstandshalter 156 und 158 aus einem Hohlräume aufweisenden Material wie beispielsweise einem porösen Material gefertigt ist, wobei die Hohlräume mit Luft gefüllt sind. Dadurch weist das Material für die Abstandshalter 156 und 158 im wesentlichen die gleichen dielektrischen Eigenschaften auf wie die Luft zwischen den äußeren Kondensatorplatten 142 und 144.

Die äußeren Kondensatorplatten 142 und 144 sind auf ein elektrisches Potential legbar und die inneren Kondensatorplatten 146 und 148 sind ebenfalls jeweils auf ein elektrisches Potential legbar. Damit erhält man eine Anordnung, wie sie bereits in Fig. 5 dargestellt und für diese beschrieben worden ist. Bei der Variante einer Ausführungsform gemäß Fig. 6 läßt sich jedoch die Kondensatorplatte 154 ebenfalls auf ein elektrisches Potential legen. Dadurch ist zwischen der Platte 154 und der zweiten äußeren Kondensatorplatte 148 ein Kondensator gebildet und zwischen der Platte 154 und der ersten inneren Kondensatorplatte 146 ein weiterer Kondensator gebildet. Dadurch entsteht ein Vergleichs- oder Referenzkondensator. Dieser Vergleichskondensator erfährt dieselben äußeren Bedingungen wie der Greiferkondensator, der jeweils zwischen den gegenüberliegenden inneren und äußeren Kondensatorplatten gebildet ist. Dies bedeutet, daß sich eine Änderung der Umgebungsbedingungen wie beispielsweise der Temperatur auf die Greiferkondensatoren genau auswirkt wie auf den Vergleichskondensator. Durch die spezielle Anordnung des Vergleichskondensators symmetrisch zu den jeweiligen Greiferkondensatoren lassen sich damit Änderungen in der Greiferstellung von Änderungen in den äußeren Bedingungen wie beispielsweise der Temperatur unterscheiden.

Bei einer vierten Variante einer Ausführungsform (Fig. 7) des kapazitiven Mikroaktors ist dieser als Aufhängevorrichtung 127 ausgebildet und weist eine erste Elektrode 124 und eine zweite Elektrode 126 auf. Die Elektroden sind dabei so angeordnet, daß sie in einer Ebene liegen. Dadurch ist eine Aufhängevorrichtung für ein dielektrisches Werkstück 128 realisiert oder, wenn die Elektroden eine entsprechende Isolations-Schutzschicht aufweisen, für ein metallisches Werkstück 128. Die elektrostatischen Kräfte zwischen den Elektroden 124 und 126 können das Werkstück an den Elektroden halten, wobei zwischen den Elektroden und dem Werkstück 128 insbesondere eine Aufhängeposition regelbar einstellbar ist. Die bei der Einprägung eines Konstantstroms abgegriffene Spannung ist proportional zu einem Abstand und über die Messung der Spannung läßt sich Abstand so regeln, daß das Werkstück an der Aufhängevorrichtung stabilisiert wird.

## Patentansprüche

1. Mikromechanische Vorrichtung, welche einen kapazitiven Mikroaktor (20) und eine Ansteuerungsschaltung (11) für den Mikroaktor (20) aufweist, wobei die Ansteuerungsschaltung (11) eine spannungsgesteuerte Stromquelle (16) umfaßt, um dem Mikroaktor (20) einen Strom einzuprägen, **dadurch gekennzeichnet, daß** der Mikroaktor (20) als kapazitiver Greifer (94) ausgebildet ist und daß die Ansteuerungsschaltung (11) eine Driftkompensationseinrichtung (36) zur Kompensation einer Drift der spannungsgesteuerten Stromquelle (16) umfaßt.

2. Mikromechanische Vorrichtung nach Anspruch 1, **dadurch gekennzeichnet, daß** die Driftkompensationseinrichtung eine Spannungsrückführung (36) für die spannungsgesteuerte Stromquelle (16) umfaßt.

3. Mikromechanische Vorrichtung nach Anspruch 2, **dadurch gekennzeichnet, daß** die Spannungsrückführung (36) als Gegenkopplung ausgebildet ist.

4. Mikromechanische Vorrichtung nach Anspruch 2 oder 3, **dadurch gekennzeichnet, daß** die Spannungsrückführung (36) einen Ausgang (48,90) der spannungsgesteuerten Stromquelle (16) mit Steuerungselementen (50, 52) der spannungsgesteuerten Stromquelle (16), welche die Stromerzeugung steuern, koppelt.

5. Mikromechanische Vorrichtung nach einem der Ansprüche 2 bis 4, **dadurch gekennzeichnet, daß** die Spannungsrückführung (36) einen Gleichrichter (70) umfaßt.

6. Mikromechanische Vorrichtung nach Anspruch 5, **dadurch gekennzeichnet, daß** der Gleichrichter (70) als Zwei-Weg-Gleichrichter ausgebildet ist.

7. Mikromechanische Vorrichtung nach einem der vorangehenden Ansprüche, **dadurch gekennzeichnet, daß** zu dem Mikroaktor (20) eine Kapazität (22) in Reihe geschaltet ist.

8. Mikromechanische Vorrichtung nach einem der vorangehenden Ansprüche, **dadurch gekennzeichnet, daß** die Vorrichtung eine Auswerteeinheit (26) umfaßt, durch welche die Stellung und/oder Bewegung des Mikroaktors (20) detektierbar ist.

9. Mikromechanische Vorrichtung nach Anspruch 8, **dadurch gekennzeichnet, daß** eine an dem Mikroaktor (20) abgegriffene Teilspannung (U₂) zur Detektion der Stellung und/oder Bewegung des Mikroaktors der Auswerteeinheit (26) zugeführt wird.

10. Mikromechanische Vorrichtung nach Anspruch 8, **dadurch gekennzeichnet, daß** eine an der in Reihe mit dem Mikroaktor (20) geschalteten Kapazität (22) abgegriffene Teilspannung (U₃) zur Detektion der Stellung und/oder Bewegung des Mikroaktors der Auswerteeinheit (26) zugeführt ist.

11. Mikromechanische Vorrichtung nach Anspruch 9 oder 10, **dadurch gekennzeichnet, daß** die Auswerteeinheit (26) einen Dividierer (30) umfaßt, der einen Quotienten aus einer am Eingang der spannungsgesteuerten Stromquelle (16) abgegriffenen Spannung (U₁) und der Teilspannung (U₂; _{U3}), welche zur Detektion der Stellung und/oder Bewegung des Mikroaktors (20) dient, bildet.

12. Mikromechanische Vorrichtung nach Anspruch 11, **dadurch gekennzeichnet, daß** die mikromechanische Vorrichtung Gleichrichter (24, 28) zur Gleichrichtung jeweils der am Eingang der spannungsgesteuerten Stromquelle (16) abgegriffenen Spannung (U₁) und der Teilspannung (U₂; U₃) vor der Quotientenbildung im Dividierer (30) umfaßt.

13. Mikromechanische Vorrichtung nach Anspruch 11 oder 12, **dadurch gekennzeichnet, daß** mittels der Auswerteeinheit (26) ein Schwellenwertschalter gebildet ist.

14. Mikromechanische Vorrichtung nach einem der Ansprüche 11 bis 13, **dadurch gekennzeichnet, daß** die mikromechanische Vorrichtung als Sensor einsetzbar ist, wobei der Mikroaktor (20) als Sensorelement wirkt.

15. Mikromechanische Vorrichtung nach einem der vorangehenden Ansprüche, **dadurch gekennzeichnet, daß** der kapazitive Mikroaktor (20) zwei gegenüberliegende Aktorelemente (96) umfaßt, welche durch elektrostatische Kräfte relativ zueinander beweglich sind, um eine Greifbewegung auszuführen.

16. Mikromechanische Vorrichtung nach Anspruch 15, **dadurch gekennzeichnet, daß** zwischen den Aktorelementen (96) an einem oberen Ende, welches einem Greifende abgewandt ist, ein Abstandshalter (106) angeordnet ist.

17. Mikromechanische Vorrichtung nach Anspruch 15 oder 16, **dadurch gekennzeichnet, daß** der kapazitive Mikroaktor (20) zwischen äußeren Aktorelementen (96; 142, 144) angeordnete elektrostatische Elemente (118; 146, 148) umfaßt, relativ zu welchen die äußeren Aktorelemente (96; 142, 144) zur Durchführung der Greifbewegung beweglich sind.

18. Mikromechanische Vorrichtung nach Anspruch 17, **dadurch gekennzeichnet, daß** die elektrostatischen Elemente (118; 142, 144; 146, 148) elektrisch leitend verbunden sind.

19. Mikromechanische Vorrichtung nach Anspruch 18, **dadurch gekennzeichnet, daß** zwischen den gegenüberliegenden elektrostatischen Elementen (146, 148) ein weiteres elektrostatisches Element (154) angeordnet ist, gegenüber dem benachbarte elektrostatische Elemente (146,148) auf einem elektrischen Potential liegen.

20. Mikromechanische Vorrichtung nach einem der vorangehenden Ansprüche, **dadurch gekennzeichnet, daß** der kapazitive Mikroaktor (20) als Aufhängevorrichtung (127) zum Aufhängen eines Werkstückes (128) mittels elektrostatischen Kräften ausgebildet ist.

21. Mikromechanische Vorrichtung nach Anspruch 20, **dadurch gekennzeichnet, daß** eine Aufhängeposition des Werkstückes (128) an der Aufhängevorrichtung (127) mit Hilfe der an der in Reihe mit dem Mikroaktor (20) geschalteten Kapazität (22) abgegriffenen Teilspannung (U₃) und/oder der an dem Mikroaktor abgegriffenen Teilspannung (U₂) regelbar ist.

22. Verfahren zur Ansteuerung eines kapazitiven Mikroaktors, bei dem dem Mikroaktor ein Strom eingeprägt wird,
**dadurch gekennzeichnet, daß** der Mikroaktor als kapazitiver Greifer ausbildet ist und daß eine spannungsgesteuerte Stromquelle zur Erzeugung des eingeprägten Stroms, die eine Spannungsgegenkopplung zur Kompensation einer Drift der spannungsgesteuerten Stromquelle aufweist, eingesetzt wird.

## Claims

1. Micromechanical device having a capacitive microactuator (20) and a drive circuit (11) for the microactuator, wherein the drive circuit (11) comprises a voltage-controlled current source (16) for the purpose of impressing a current upon the microactuator (20), **characterized in that** the microactuator (20) is designed as a capacitive gripping device (94) and that the drive circuit (11) comprises a drift compensation device (36) for the compensation of any drift of the voltage-controlled current source (16).

2. Micromechanical device as defined in claim 1, **characterized in that** the drift compensation device comprises a voltage feedback (36) for the voltage-controlled current source (16).

3. Micromechanical device as defined in claim 2, **characterized in that** the voltage feedback (36) is designed as a negative feedback.

4. Micromechanical device as defined in claim 2 or 3, **characterized in that** the voltage feedback (36) couples an output (48, 90) of the voltage-controlled current source (16) to control elements (50, 52) of the voltage-controlled current source (16), said control elements controlling the generation of current.

5. Micromechanical device as defined in any one of claims 2 to 4, **characterized in that** the voltage feedback (36) comprises a rectifier (70).

6. Micromechanical device as defined in claim 5, **characterized in that** the rectifier (70) is designed as a two-way rectifier.

7. Micromechanical device as defined in any one of the preceding claims, **characterized in that** a capacitor (22) is connected in series to the microactuator (20).

8. Micromechanical device as defined in any one of the preceding claims, **characterized in that** the device comprises an evaluation unit (26), the position and/or movement of the microactuator (20) being detectable by said evaluation unit.

9. Micromechanical device as defined in claim 8, **characterized in that** a partial voltage (U₂) tapped at the microactuator (20) is supplied to the evaluation unit (26) for the detection of the position and/or movement of the microactuator.

10. Micromechanical device as defined in claim 8, **characterized in that** a partial voltage (U₃) tapped at the capacitor (22) connected in series to the microactuator (20) is supplied to the evaluation unit (26) for the detection of the position and/or movement of the microactuator.

11. Micromechanical device as defined in claim 9 or 10, **characterized in that** the evaluation unit (26) comprises a divider (30) forming a quotient from a voltage (U₁) tapped at the input of the voltage-controlled current source (16) and the partial voltage (U₂; U₃) serving the purpose of detecting the position and/or movement of the microactuator (20).

12. Micromechanical device as defined in claim 11, **characterized in that** the micromechanical device comprises rectifiers (24, 28) for respectively rectifying the voltage (U₁) tapped at the input of the voltage-controlled current source (16) and the partial voltage (U₂; U₃) prior to the formation of the quotient in the divider (30).

13. Micromechanical device as defined in claim 11 or 12, **characterized in that** a threshold switch is formed by the evaluation unit (26).

14. Micromechanical device as defined in any one of claims 11 to 13, **characterized in that** the micromechanical device is adapted to be used as a sensor, wherein the microactuator (20) acts as a sensor element.

15. Micromechanical device as defined in any one of the preceding claims, **characterized in that** the capacitive microactuator (20) comprises two oppositely located actuator elements (96) movable relative to one another by means of electrostatic forces in order to carry out a gripping movement.

16. Micromechanical device as defined in claim 15, **characterized in that** a spacer (106) is arranged between the actuator elements (96) at an upper end facing away from a gripping end.

17. Micromechanical device as defined in claim 15 or 16, **characterized in that** the capacitive microactuator (20) comprises electrostatic elements (118; 146, 148) arranged between outer actuator elements (96; 142, 144), the outer actuator elements (96; 142, 144) being movable relative to said electrostatic elements for the purpose of carrying out the gripping movement.

18. Micromechanical device as defined in claim 17, **characterized in that** the electrostatic elements (118; 142, 144; 146, 148) are connected in an electrically conductive manner.

19. Micromechanical device as defined in claim 18, **characterized in that** an additional electrostatic element (154) is arranged between the oppositely located electrostatic elements (146, 148), adjacent electrostatic elements (146, 148) being at an electric potential in relation to said additional electrostatic element.

20. Micromechanical device as defined in any one of the preceding claims, **characterized in that** the capacitive microactuator (20) is designed as a suspension device (127) for suspending a workpiece (128) by means of electrostatic forces.

21. Micromechanical device as defined in claim 20, **characterized in that** a suspension position of the workpiece (128) on the suspension device (127) is regulatable with the aid of the partial voltage (U₃) tapped at the capacitor (22) connected in series to the microactuator (20) and/or the partial voltage (U₂) tapped at the microactuator.

22. Method for driving a capacitive microactuator, wherein a current is impressed upon the microactuator,
**characterized in that** the microactuator is designed as a capacitive gripping device and that a voltage-controlled current source is used to generate the impressed current, said current source having a negative voltage feedback for the compensation of any drift of the voltage-controlled current source.

## Revendications

1. Dispositif micromécanique, qui présente un microactionneur capacitif (20) et un circuit de pilotage (11) destiné au microactionneur (20), dans lequel le circuit de pilotage (11) comporte une source de courant (16) asservie à la tension pour appliquer un courant au microactionneur (20), **caractérisé en ce que** le microactionneur (20) est conçu sous forme d'organe de saisie capacitif (94) et **en ce que** le circuit de pilotage (11) comprend une installation de compensation de dérive (36) permettant de compenser une dérive de la source de courant (16) asservie à la tension.

2. Dispositif micromécanique selon la revendication 1, **caractérisé en ce que** l'installation de compensation de dérive comprend une rétroaction de tension (36) pour la source de courant (16) asservie à la tension.

3. Dispositif micromécanique selon la revendication 2, **caractérisé en ce que** la rétroaction de tension (36) est conçue sous forme de contre-réaction.

4. Dispositif micromécanique selon la revendication 2 ou 3, **caractérisé en ce que** la rétroaction de tension (36) connecte une sortie (48, 90) de la source de courant (16) asservie à la tension à des éléments de commande (50, 52) de la source de courant (16) asservie à la tension, laquelle commande la production de courant.

5. Dispositif micromécanique selon l'une quelconque des revendications 2 à 4, **caractérisé en ce que** la rétroaction de tension (36) comprend un redresseur (70).

6. Dispositif micromécanique selon la revendication 5, **caractérisé en ce que** le redresseur (70) est configuré comme un redresseur double alternance.

7. Dispositif micromécanique selon l'une quelconque des revendications précédentes, **caractérisé en ce qu'**une capacité (22) est montée en série sur le microactionneur (20).

8. Dispositif micromécanique selon l'une quelconque des revendications précédentes, **caractérisé en ce que** le dispositif comprend une unité d'évaluation (26), à travers laquelle il est possible de détecter la position et/ou le mouvement du microactionneur (20).

9. Dispositif micromécanique selon la revendication 8, **caractérisé en ce qu'**une tension partielle (U₂) prélevée au niveau du microactionneur (20) permettant de détecter la position et/ou le mouvement du microactionneur est appliquée à l'unité d'évaluation (26).

10. Dispositif micromécanique selon la revendication 8, **caractérisé en ce qu'**une tension partielle (U₃) prélevée au niveau de la capacité (22) montée en série avec le microactionneur (20) permettant de détecter la position et/ou le mouvement du microactionneur est appliquée à l'unité d'évaluation (26).

11. Dispositif micromécanique selon la revendication 9 ou 10, **caractérisé en ce que** l'unité d'évaluation (26) comprend un diviseur (30) qui forme un quotient à partir d'une tension (U₁) prélevée à l'entrée de la source de courant (16) asservie à la tension et la tension partielle (U₂; U₃), laquelle tension sert à détecter la position et/ou le mouvement du microactionneur (20).

12. Dispositif micromécanique selon la revendication 11, **caractérisé en ce que** le dispositif micromécanique comprend des redresseurs (24, 28) permettant de redresser respectivement la tension (U1) prélevée à l'entrée de la source de courant (16) asservie à la tension et la tension partielle (U2 ; U3) avant la formation de quotient dans le diviseur (30).

13. Dispositif micromécanique selon la revendication 11 ou 12, **caractérisé en ce qu'**un interrupteur de valeur seuil est formé à l'aide d'une unité d'évaluation (26).

14. Dispositif micromécanique selon l'une quelconque des revendications 11 à 13, **caractérisé en ce que** le dispositif micromécanique peut être utilisé comme capteur, en sachant que le microactionneur (20) fonctionne comme un capteur.

15. Dispositif micromécanique selon l'une quelconque des revendications précédentes, **caractérisé en ce que** le microactionneur capacitif (20) comprend deux éléments actionneurs (96) opposés, qui sont mobiles les uns par rapport aux autres par des forces électrostatiques, pour exécuter un mouvement de saisie.

16. Dispositif micromécanique selon la revendication 15, **caractérisé en ce qu'**un écarteur (106) est disposé entre les éléments actionneurs (96) au niveau d'une extrémité supérieure, laquelle fait dos à une extrémité de saisie.

17. Dispositif micromécanique selon la revendication 15 ou 16, **caractérisé en ce que** le microactionneur (20) capacitif comprend des éléments électrostatiques (118 ; 146, 148) disposés entre les éléments actionneurs extérieurs (96 ; 142, 144), par rapport auxquels les éléments actionneurs extérieurs (96 ; 142 ; 144) sont mobiles pour exécuter le mouvement de saisie.

18. Dispositif micromécanique selon la revendication 17, **caractérisé en ce que** les éléments électrostatiques (118; 142 , 144 ; 146, 148) sont reliés de manière électroconductrice.

19. Dispositif micromécanique selon la revendication 18, **caractérisé en ce qu'**un autre élément électrostatique (154) est disposé entre les éléments électrostatiques opposés (146, 148), face auquel des éléments électrostatiques voisins (146, 148) se trouvent sur un potentiel électrique.

20. Dispositif micromécanique selon l'une quelconque des revendications précédentes, **caractérisé en ce que** le microactionneur capacitif (20) est conçu comme un dispositif de suspension (127) permettant de suspendre une pièce à usiner (128) au moyen de forces électrostatiques.

21. Dispositif micromécanique selon la revendication 20, **caractérisé en ce qu'**une position de suspension de la pièce à usiner (128) peut être réglée au niveau du dispositif de suspension (127) à l'aide de la tension partielle (U₃) prélevée au niveau de la capacité (22) montée en série avec le microactionneur (20) et/ou la tension partielles (U₂) prélevée au niveau du microactionneur.

22. Procédé de pilotage d'un microactionneur capacitif, sur lequel un courant est appliqué au microactionneur,
**caractérisé en ce que** le microactionneur est conçu comme un organe de saisie capacitif et **en ce qu'**on utilise une source de courant asservie à la tension pour générer le courant appliqué, laquelle source présente une contre-réaction de tension permettant de compenser une dérive de la source de courant asservie à la tension.
